# EUROPÄISCHE PATENTSCHRIFT

(11) **EP 2 866 637 B1**
(45) Veröffentlichungstag und Bekanntmachung des Hinweises auf die Patenterteilung: **06.06.2018**
(21) Anmeldenummer: 13752805.5
(22) Anmeldetag: 25.06.2013
(51) Int. Cl.: A47L 15/42, D06F 39/02, D06F 39/08, F16K 11/074, A47L 15/44, D06F 39/00

(54) **VORRICHTUNG UND VERFAHREN ZUR SCHALTBAREN FÖRDERUNG WENIGSTENS EINES MEDIUMS**
DEVICE AND METHOD FOR THE CONTROLLABLE DELIVERY OF AT LEAST ONE MEDIUM
DISPOSITIF ET PROCÉDÉ POUR LE TRANSPORT COMMANDÉ D'AU MOINS UN MILIEU

(30) Priorität: 27.06.2012 DE 102012012694; 29.06.2012 DE 102012012913
(43) Veröffentlichungstag der Anmeldung: 06.05.2015
(73) Patentinhaber: Saier, Beatrice, 79117 Freiburg / Kappel (DE); Saier, Michael, 79117 Freiburg / Kappel (DE)
(72) Erfinder: SAIER, Michael, 79117 Freiburg / Kappel (DE)
(74) Vertreter: Roche, von Westernhagen & Ehresmann
(86) Internationale Anmeldenummer: PCT/DE2013/000328
(87) Internationale Veröffentlichungsnummer: WO 2014/000726

(56) Entgegenhaltungen:
- EP-A1- 2 361 691
- WO-A2-2012/062265
- DE-A1-102007 037 883

## Beschreibung

Die Erfindung betrifft zunächst eine Vorrichtung zur schaltbaren Förderung wenigstens eines Mediums nach Anspruch 1.

Aus der WO2012/0622652 der Anmelder geht eine Vorrichtung zur Dosierung und Mischung von Fluiden hervor. Hier ist eine Stellanordnung mit einem verlagerbaren Durchgangskanal beschrieben, der wahlweise mit unterschiedlichen Einlassöffnungen in kommunikative Verbindung bringbar ist. Eine Pumpenanordnung kann den Duchgangskanal mit Unterdruck beaufschlagen.

Ausgehend von der bekannt gewordenen Vorrichtung besteht die Aufgabe der Erfindung darin, eine Vorrichtung zur schaltbaren Förderung wenigstens eines Mediums bereit zu stellen, mit der bei kompakter Bauweise und unter Gewährleistung einer sicheren Funktionsweise eine verbesserte Spülung der Leitungswege erfolgen kann.

Die Erfindung löst diese Aufgabe mit den Merkmalen des Anspruchs 1.

Das Prinzip der Erfindung besteht im Wesentlichen darin, bei einer Vorrichtung zur schaltbaren Förderung wenigstens eines Mediums mehrere Eingänge und mehrere Ausgänge vorzusehen, und durch Anordnung eines Stellgliedes mit mehreren besonderen Durchgangskanälen in optimierter Weise, bei unterschiedlichen Positionen des Stellgliedes, unterschiedliche, aber jeweils eindeutig definierte Verbindungswege bereit zu stellen.

Die Erfindung wird zunächst beschrieben unter der Annahme, dass sie der Förderung nur eines Mediums sowie alternativ eines Spülmediums dient.

Besonders vorteilhaft ist die Vorrichtung allerdings einsetzbar, wenn mit ihr ein erstes Medium zu einem ersten Zielbehältnis für dieses Medium und wahlweise ein zweites Medium zu einem zweiten unterschiedlichen Zielbehältnis für dieses zweite Medium gefördert werden soll, sowie zusätzlich ein Spülmedium durch die Leitungswege der Vorrichtung hindurch zum Zwecke der Spülung dieser Leitungen förderbar ist.

Zunächst soll die prinzipielle Funktionsweise der erfindungsgemäßen Vorrichtung unter der Annahme erläutert werden, dass nur ein Medium und ein Spülmedium wechselweise gefördert werden sollen. Bei dieser Grundbauweise weist die Vorrichtung einen Mediumeingang auf, der mit einem Mediumvorrat verbindbar ist. Als Medium kommen sämtliche förderbaren Medien, insbesondere Fluide, weiter insbesondere Flüssigkeiten, in Betracht, wie beispielsweise flüssige Reiniger oder Klarspülmittel für eine Geschirr- Reinigungsanlage. Der Mediumvorrat ist insoweit beispielsweise von einem Reinigervorrat und von einem Klarspülmittelvorrat bereit gestellt. Die Vorrichtung weist des weiteren einen Mediumausgang für dieses Medium auf, der mit einem Zielbehältnis für das Medium verbindbar ist, also beispielweise mit einem Reinigerlösungstank und/oder mit einem Geschirraufnahmeraum der Geschirrspülmaschine.

Die erfindungsgemäße Vorrichtung weist zudem einen Eingang für ein Spülmedium auf. Das Spülmedium ist im einfachsten Fall Wasser. Es kann sich bei dem Spülmedium allerdings um jede geeignete Flüssigkeit handeln, mit der die Kanäle und Leitungswege, durch die das Medium hindurch fließt, gespült werden können. Insbesondere unter Verwendung von Schlauchleitungen im Leitungswegesystem, beispielsweise bei Verwendung von Schlauchleitungen, die Bestandteil einer Schlauchpumpe sind, ist die Spülung dieser Schlauchleitungen durch das Spülmedium vorteilhaft, um die Lebensdauer der Schlauchleitungen zu erhöhen. Die Medien selbst können beispielsweise eine gewisse chemische Aggressivität aufweisen oder die Schlauchinnenseiten jedenfalls so beanspruchen, dass die Funktion der Schlauchpumpe beeinträchtigt werden könnte. Eine regelmäßige, insbesondere häufige Spülung dieser Schlauchleitungen zum Zwecke der Entfernung des Mediums aus diesen Leitungen ist erfindungsgemäß möglich und vorteilhaft.

Das Spülmedium kann für den Fall, dass die Medien chemikalisch besonders aggressiv sind, Neutralisationswirkungen bereit stellen.

Das Spülmedium kann zusätzlich oder alternativ zu dem beschriebenen Einsatz zum Zwecke der Spülung der Leitungswege auch dazu dienen, eine Phasentrennung von zwei unterschiedlichen Medien zu erreichen.

Die Vorrichtung weist des weiteren einen Pumpenausgang auf, der mit der Pumpe, und zwar mit der Eingangsseite der Pumpe, verbindbar ist. Schließlich weist die Vorrichtung einen Pumpeneingang auf, der ebenfalls mit der Pumpe, nämlich mit der Ausgangsseite der Pumpe, verbindbar ist.

In der Vorrichtung ist schließlich ein Stellglied vorgesehen, welches zwischen verschiedenen Stellpositionen verstellbar ist. Hierzu ist das Stellglied von einem Antrieb, insbesondere motorisch, angetrieben, insbesondere elektronisch gesteuert. Die elektronische Steuerung des Stellgliedes geht dabei vorteilhafterweise einher mit einer elektronischen Steuerung der Pumpe, so dass die Pumpe nur zu vorgegebenen Zeitpunkten und für vorgegebene Zeiträume eine Förderung des Mediums oder des Spülmediums vornimmt. Auch wird gewährleistet, dass das Stellglied sich in der für die Förderung des entsprechenden Mediums vorgesehenen Position befindet und die gewünschten Mengen des Mediums oder Spülmediums durch die Pumpe gefördert werden.

Das Stellglied kann eine erste Stellposition einnehmen, in der es eine kommunikative Verbindung zwischen dem Mediumeingang und dem Pumpenausgang bereit stellt. In dieser Stellposition ist also gewährleistet, dass das Medium zu der Pumpe gelangen kann. Zugleich stellt das Stellglied in dieser Stellposition eine kommunikative Verbindung zwischen dem Pumpeneingang und dem Mediumausgang bereit. Die Pumpe ist also bei dieser Stellgliedposition in der Lage, das Medium zum Mediumausgang hin zu fördern.

Das Stellglied ist in eine zweite Stellposition verlagerbar, in der es eine kommunikative Verbindung zwischen dem Spülmediumeingang und dem Pumpenausgang bereit stellt. In dieser zweiten Stellposition stellt es zugleich eine kommunikative Verbindung zwischen dem Pumpeneingang und dem Mediumausgang bereit. Zugleich ist unter Zwischenschaltung der Pumpe immer eine kommunikative Verbindung zwischen dem Pumpenausgang und dem Pumpeneingang gewährleistet. In dieser Stellung des Stellgliedes wird die Möglichkeit bereit gestellt, dass die Pumpe das Spülmedium zum Mediumausgang hin fördert.

Des weiteren ist das Stellglied vorteilhaft in eine weitere Stellposition verlagerbar, in der es eine kommunikative Verbindung zwischen dem Pumpeneingang und dem Mediumausgang sperrt.

Vorteilhafterweise ist vorgesehen, dass das Stellglied, wenn es sich in der ersten Stellposition befindet, zugleich eine kommunikative Verbindung zwischen dem Spülmediumeingang und dem Pumpenausgang sperrt. Schließlich ist weiter vorteilhafterweise vorgesehen, dass das in zweiter Stellposition befindliche Stellglied zugleich eine kommunikative Verbindung zwischen dem Mediumeingang und dem Pumpenausgang sperrt.

Die Vorrichtung stellt die Möglichkeit bereit, an dem Mediumeingang und an dem Spülmediumeingang sowie an dem Mediumausgang, und schließlich auch an dem Pumpenausgang und an dem Pumpeneingang auf einfache Weise Leitungen, zum Beispiel Schläuche, anzubringen, beispielsweise unter Zuhilfenahme von Stutzen. Hierdurch kann auf herkömmliche Leitungsmittel und Leitungsbefestigungsmittel für das Medium und das Spülmedium zurück gegriffen werden.

Die erfindungsgemäße Vorrichtung ermöglicht in einfacher Weise die Bereitstellung eines ersten Förderweges für ein Medium von dem Mediumeingang durch die Pumpe hindurch bis zum Mediumausgang und in einer anderen Stellposition des Stellgliedes eines kommunikative Verbindung von dem Spülmediumeingang bis zum Mediumausgang. Es ist auf diese Weise durch bloße Verlagerung des Stellgliedes eine einfache Schaltbarkeit der Leitungswege gegeben. Die Vorrichtung fungiert insoweit als eine Art Weiche mit definiert vorgegebenen Leitungswegen.

Für den Fall, dass die Vorrichtung einen zweiten Medieneingang und einen zweiten Mediumausgang aufweist, stellt die Vorrichtung in analoger Weise weitere, definierte Leitungswege bereit. So kann durch eine entsprechende Verlagerung des Stellgliedes in eine dritte Stellposition dafür gesorgt werden, dass der zweite Mediumeingang mit dem zweiten Mediumausgang verbunden ist und in einer vierten Stellposition der Spülmediumeingang mit dem zweiten Mediumausgang verbunden ist.

Es kann also bei Anordnung mehrerer Medieneingänge und mehrerer Medienausgänge dafür gesorgt werden, dass entweder eine exakte Verortung eines bestimmten Mediumeingangs mit einem bestimmten Medienausgang gewährleistet ist, oder alternativ eine Verortung des Spülmediumeingangs mit einem bestimmten Mediumausgang.

Eine besonders vorteilhafte Ausgestaltung der Erfindung ergibt sich bei gewerblichen Spülmaschinen oder gewerblichen Geschirrspüleinrichtungen, bei denen regelmäßig ein Geschirrspülmittel, der sogenannte Reiniger, als erstes Medium, und ein Klarspüler als zweites Medium eingesetzt wird. Als Spülmedium ist in diesem Falle vorzugsweise Wasser vorgesehen.

Im Stand der Technik war es hierzu bislang erforderlich, die beiden unterschiedlichen Medien, Reiniger und Klarspüler, jeweils mit gesonderten Pumpen zu fördern. Zudem haben die verwendeten Medien aufgrund ihrer chemischen Aggressivität bzw. Reaktionsfähigkeit einen nachteiligen Einfluss auf die Lebensdauer der verwendeten Schlauchleitungen der Schlauchpumpe ausgeübt. Mit der erfindungsgemäßen Vorrichtung ist es möglich, unter Verwendung einer einzigen Pumpe beide Medien zu fördern, wobei die erfindungsgemäße Vorrichtung die entsprechenden Leitungswege schaltbar durch Verlagerung des Stellgliedes bereit stellt. Hierzu genügt es, wenn das Stellglied mehrere Durchgangskanäle aufweist. Im Sinne der Erfindung ist es vorteilhaft, wenn das Stellglied eine Zahl an Durchgangskanälen aufweist, die dem zweifachen der Zahl der zu fördernden Medien zuzüglich eines Spülmitteldurchgangskanals entspricht.

Erfindungsgemäß lässt sich darüber hinaus gewährleisten, dass jedes Mal nach Eintragen eines Mediums in das Schlauchleitungssystem, insbesondere eines Eintragens in die Schlauchleitung in der Pumpe, eine Spülung des Leitungssystems durch ein Spülmedium erfolgt. Hierdurch kann die Funktionsfähigkeit der Vorrichtung über einen wesentlich längeren Zeitraum erhöht werden. Auch Wartungsintervalle können vergrößert werden.

In einer besonders vorteilhaften Ausgestaltung der Erfindung weist das Stellglied einen Durchgangskanal auf, der den Pumpeneingang mit dem Mediumausgang sowohl bei in erster Stellposition befindlichem Stellglied, als auch bei in zweiter Stellposition befindlichem Stellglied, verbindet. Hierdurch wird gewährleistet, dass eine Spülung der Leitungswege zwischen Pumpenausgang und Pumpeneingang durch Spülmedium erfolgen kann, und insbesondere eine Förderung des Spülmediums durch diese Leitungswege hindurch möglich ist. Eine Spülung erfolgt derart, dass die in Folge des Spülvorganges aus diesen Leitungswegen heraus auszutragenden Flüssigkeitsvolumina in die Leitungsabschnitte stromabwärts des Mediumsausgangs hin gefördert werden.

Um zu gewährleisten, dass dieser Durchgangskanal bei in erster Position befindlichem Stellglied und bei in zweiter Stellposition befindlichem Stellglied den Pumpeneingang mit dem Mediumausgang verbindet, kann der Durchgangskanal an seinem dem Pumpeneingang zugewandten Ende einen ersten Mündungsbereich und einen zweiten Mündungsbereich aufweisen. Bei in erster Stellposition befindlichem Stellglied ist der erste Mündungsbereich dem Pumpeneingang unmittelbar gegenüberliegend angeordnet und bei in zweiter Stellposition befindlichem Stellglied ist der zweite Mündungsbereich dem Pumpeneingang unmittelbar gegenüberliegend angeordnet.

Die beiden Mündungsbereiche können beispielsweise nach Art eines Y-förmigen Leitungssystems mit dem Mediumausgang verbunden sein. Es ist gemäß einer besonders vorteilhaften Ausgestaltung der Erfindung allerdings auch möglich, dass die beiden Mündungsbereiche von einer gemeinsamen, halboffenen Nut bereit gestellt sind, und beispielsweise von den entsprechenden Bereichen dieser Nut gebildet sind.

Beispielsweise ist denkbar, dass das Stellglied von einer kreisscheibenförmigen, drehbaren Scheibe gebildet ist, und die Nuten kreisbogenförmig ausgebildet sind. Die beiden Mündungsbereiche können in diesem Falle von unterschiedlichen Bereichen des Kreisbogenabschnittes bereit gestellt sein.

Bei einer Vorrichtung zur schaltbaren Förderung wenigstens eines Mediums kann bei kompakter Bauweise unter Gewährleistung sicherer Funktionsweise eine verbesserte Spülung der Leitungswege erfolgen.

Hier kann ein Stellglied vorgesehen sein, welches wenigstens drei Durchgangskänale aufweist. Der erste Durchgangskanal dient zur Förderung des Mediums von dem Mediumeingang zum Pumpenausgang. Dieser Durchgangskanal ermöglicht insoweit eine Förderung des Mediums bis zur Pumpe.

Der zweite Durchgangskanal dient zur Förderung des Mediums vom Pumpeneingang zum Mediumausgang. Damit kann das Medium, ggf. aber auch das Spülmedium, von der Pumpe zu dem Zielbehältnis gefördert werden.

Schließlich ist wenigstens ein dritter Durchgangskanal in dem Stellglied vorgesehen, welcher es ermöglicht, das Spülmedium von dem Spülmediumeingang zum Pumpenausgang zu fördern.

Durch Bereitstellung dieser drei unterschiedlichen Durchgangskanäle wird eine sichere und definierte Bereitstellung von Leitungswegen durch die Vorrichtung hindurch möglich.

Gemäß einer weiteren vorteilhaften Ausgestaltung der Erfindung ist das Stellglied drehbar angeordnet. Hier können insoweit unterschiedliche Stellpositionen des Stellgliedes unterschiedlichen Drehpositionen des Stellgliedes entsprechen. Dadurch kann eine, in konstruktiver Hinsicht besonders vorteilhafte Bauweise erreicht werden.

Weiter vorteilhafterweise ist das Stellglied im Wesentlichen scheibenförmig ausgebildet, vorteilhafterweise insbesondere kreisscheibenförmig.

Der Medieneingang und der Medienausgang können auf einer ersten Seite des Stellgliedes angeordnet sein. Auch der Spülmedieneingang, sowie, im Falle der Verwendung weiterer Medieneingänge und weiterer Medienausgänge, können diese weiteren Medieneingänge- und Ausgänge ebenfalls auf der gleichen Seite des Stellgliedes angeordnet sein.

Der Pumpenausgang und der Pumpeneingang können auf der anderen Seite des Stellgliedes angeordnet sein. Dies ermöglicht es beispielsweise bei einer besonders vorteilhaften Ausgestaltung der Erfindung, dass der Pumpenausgang und der Pumpeneingang fest relativ zu der Pumpe, insbesondere fest relativ zu einem Gehäuse der Pumpe, angeordnet werden.

Weiter vorteilhaft ist von der Erfindung umfasst, dass die Erfindung ein Stellglied aufweist, welches in unterschiedliche Stellpositionen verlagerbar ist.

Das Stellglied kann als eine erste Scheibe, beispielsweise als eine sogenannte Einlaufscheibe oder eine Mediumscheibe relativ zu einer festgehaltenen Pumpenscheibe oder einem festgehaltenen Gehäusebestandteil verlagerbar sein. Alternativ ist möglich, dass das Stellglied selbst festgehalten ist und relativ dazu ein anderes Element verlagerbar ist.

Schließlich kann auch vorgesehen sein, dass das Stellglied als eine mittlere Scheibe zwischen einer pumpenseitig festgehaltenen Ausgangsscheibe und einer medienseitig festgehaltenen Eingangsscheibe verlagerbar ausgestaltet ist.

Gemäß einer besonders vorteilhaften Ausgestaltung der Erfindung umfasst das Stellglied eine Zahl von Nuten, die der Zahl der Medieneingänge zuzüglich der Zahl eins entspricht. Die Nuten sind vorteilhafterweise auf der Seite des Stellgliedes angeordnet, die der Pumpe zugewandt ist.

Weiter vorteilhaft besteht das Stellglied aus einem keramischen Material. Gleichermaßen kann auch eine Pumpenscheibe aus diesem Material bestehen.

Hierzu kann auf die eingangs erwähnte vorveröffentlichte Patentanmeldung der Anmelder Bezug genommen werden, deren Inhalt hiermit, auch zum Zwecke der Bezugnahme auf einzelne Merkmale, in den Inhalt der vorliegenden Patentanmeldung mit eingeschlossen wird.

Die Anordnung von keramischen Flächen zum Zwecke der Erzielung einer Abdichtung ist in der im Stand der Technik bekannten und beschriebenen Weise besonders vorteilhaft und bei dieser Erfindung analog einsetzbar.

Die Pumpe kann vorteilhafterweise von einer Schlauchpumpe bereit gestellt sein oder eine Schlauchpumpe umfassen. Damit kann auf herkömmliche Pumpen zurück gegriffen werden.

Weiter vorteilhafterweise kann ein Schlauch der Schlauchpumpe nach jedem Mediumeintrag von Spülmedium durchspült werden.

Ein bekanntes Verfahren kann derartig weiter entwickelt werden, dass eine schaltbare Förderung wenigstens eines Mediums möglich wird, die bei kompakter Bauweise der eingesetzten Vorrichtung und unter Gewährleistung einer sicheren Funktionsweise eine verbesserte Spülung der Leitungswege möglich macht.

Hierzu kann jedes Mal, nachdem ein Medium in die Leitungswege der Pumpe hinein eingetragen worden ist, eine Spülung dieser Leitungswege erfolgt, um die Leitungswege zu säubern und in chemischer Hinsicht zu entlasten. Zugleich kann eine solche Spülung auf einfache Weise dadurch geleistet werden, dass das Stellglied in eine geänderte Stellposition verfahren wird, hierdurch geänderte Leitungswege in der Stellanrichtung bereit gestellt werden, und Spülmedium in die Leitungswege eingetragen wird.

Bei einer Spülanlage können deren Leitungswege, insbesondere der Leitungswege innerhalb einer Pumpeneinheit, für ein Medium, in chemischer Hinsicht entlastet werden.

Hierzu kann jedes Mal, nachdem ein Medium in die Leitungswege der Pumpe hinein eingetragen worden ist, eine Spülung dieser Leitungswege erfolgt, um die Leitungswege zu säubern und in chemischer Hinsicht zu entlasten. Zugleich kann eine solche Spülung auf einfache Weise dadurch geleistet werden, dass eine Stelleinrichtung in eine geänderte Stellposition verfahren wird, hierdurch geänderte Leitungswege in der Stelleinrichtung bereit gestellt werden, und Spülmedium in die Leitungswege eingetragen wird.

Als Spülanlage im Sinne der vorliegenden Patentanmeldung werden insbesondere gewerbliche Spülmaschinen für Besteck und/oder Geschirr und/oder Gläser aber auch Reinigungs- und/oder Desinfektionseinrichtungen für andere zu reinigende oder zu desinfizierende Behältnisse oder Gegenstände, wie z.B. Steckbecken, Töpfe, Operationsbestecke, Laborinstrumente, Bleche etc. bezeichnet.

Die Stelleinrichtung kann bei einer Variante der Erfindung zwei Sperreinrichtungen umfassen, wobei eine erste Sperreinrichtung die kommunikative Verbindung zwischen dem Mediumeingang und dem Pumpenausgang sperren oder öffnen kann, und wobei eine zweite Sperreinrichtung die kommunikative Verbindung zwischen dem Spülmediumeingang und dem Pumpenausgang sperren oder öffnen kann. Die Stelleinrichtung kann ein Gehäuse aufweisen, wobei die beiden Sperreinrichtungen innerhalb des Gehäuses angeordnet sind. Die Stelleinrichtung kann aber auch lediglich als Funktionseinheit die beiden Sperreinrichtungen umfassen.

Vorteilhaft sind die Sperreinrichtungen von Ventilen bereitgestellt.

Weiter vorteilhaft sind die Sperreinrichtungen unter Zuhilfenahme einer elektronischen oder elektrischen Steuerung miteinander gekoppelt.

Weiter vorteilhaft sorgt die Steuerung dafür, dass nach dem Öffnen und/oder nach dem Schliessen derjenigen Sperreinrichtung, die dem Medium zugeordnet ist, diejenige Sperreinrichtung öffnet, die dem Spülmedium zugeordnet ist, um die Leitungswege innerhalb der Pumpe von dem Medium zu spülen.

Bei einem weiter entwickelten Verfahren wird eine schaltbare Förderung wenigstens eines Mediums möglich, die bei kompakter Bauweise der eingesetzten Vorrichtung und unter Gewährleistung einer sicheren Funktionsweise eine verbesserte Spülung der Leitungswege möglich macht.

Hierzu kann jedes Mal, nachdem ein Medium in die Leitungswege der Pumpe hinein eingetragen worden ist, eine Spülung dieser Leitungswege erfolgen, um die Leitungswege zu säubern und in chemischer Hinsicht zu entlasten.

Zugleich kann eine solche Spülung auf einfache Weise dadurch geleistet werden, dass die Stelleinrichtung in eine geänderte Stellposition verfahren wird, hierdurch geänderte Leitungswege in der Stelleinrichtung bereit gestellt werden, und Spülmedium in die Leitungswege eingetragen wird.

Weitere Vorteile der Erfindung ergeben sich aus den nicht zitierten Unteransprüchen sowie anhand der nachfolgenden Beschreibung der in den Zeichnungen dargestellten Ausführungsbeispiele. In den Figuren zeigen:
- Fig. 1: in einer schematischen perspektivischen Ansicht in Einzeldarstellung das Stellglied mit seiner den Medieneingängen zugewandten Seite,
- Fig. 2: in einer Darstellung gemäß Fig. 1 das Stellglied in einer Rückansicht,
- Fig. 3: das Stellglied der Fig. 2 in Draufsicht,
- Fig. 4: in einer Darstellung gemäß Fig. 3 das Stellglied in Rückansicht,
- Fig. 5: das Stellglied der Fig. 3 in einer teilgeschnittenen Ansicht, etwa entlang Schnittlinie V - V in Fig. 3,
- Fig. 6: das Stellglied in einer Darstellung gemäß Fig. 5, etwa entlang einer Schnittlinie VI - VI in Fig. 3,
- Fig. 7: das als Auslaufscheibe oder pumpenseitige Scheibe bezeichenbare Element in Einzeldarstellung in einer perspektivischen Ansicht in einer Darstellung vergleichbar Fig. 1,
- Fig. 8: die Pumpenscheibe der Fig. 7 in einer Rückansicht,
- Fig. 9: die Pumpenscheibe in einer Draufsicht,
- Fig. 10: die Pumpenscheibe der Fig. 9 in einer Rückansicht,
- Fig. 11: die Pumpenscheibe in einer teilgeschnittenen Ansicht, etwa entlang Schnittlinie XI - XI in Fig. 9,
- Fig. 12: die Pumpenscheibe in einer Darstellung gemäß Fig. 11, etwa entlang Schnittlinie XII - XII in Fig. 9,
- Fig. 13: in einer schematischen, vereinfachten, perspektivischen Ansicht ein Ausführungsbeispiel einer erfindungsgemäßen Vorrichtung mit Pumpe,
- Fig. 14: die Vorrichtung der Fig. 13 in einer teilgeschnittenen schematischen Ansicht,
- Fig. 15: in einer perspektivischen Ansicht in Einzeldarstellung die erfindungsgemäße Vorrichtung zur Förderung von Medien,
- Fig. 16: die Vorrichtung der Fig. 15 in Explosionsdarstellung,
- Fig. 17: in einer schematischen teilgeschnittenen Funktionsansicht die erfindungsgemäße Vorrichtung der Fig. 15 in Unteransicht,
- Fig. 18: die Vorrichtung der Fig. 17 in einer schematischen teilgeschnittenen Ansicht entlang Schnittlinie XVIII - XVIII in Fig. 17,
- Fig. 19: die Vorrichtung der Fig. 17 bei veränderter Drehposition des Stellgliedes, wobei das Stellglied ausgehend von der Position der Fig. 17 entgegen dem Uhrzeigersinn verfahren worden ist,
- Fig. 20: die Vorrichtung der Fig. 19 in einer Darstellung gemäß Fig. 18 in Schnittansicht, etwa Schnittlinie XX - XX in Fig. 19,
- Fig. 21: die Vorrichtung der Fig. 19, bei der das Stellglied ausgehend von Fig. 19 im Uhrzeigersinn um einige Grad verfahren worden ist,
- Fig. 22: die Vorrichtung der Fig. 21 in einer Schnittansicht, etwa entlang Schnittlinie XXII - XXII in Fig. 21,
- Fig. 23: die Vorrichtung gemäß Fig. 21 mit in Uhrzeigersinn verfahrenem Stellglied,
- Fig. 24: die Vorrichtung gemäß Fig. 23, etwa entlang Schnittlinie XXIV - XXIV in Fig. 23,
- Fig. 25: die Vorrichtung gemäß Fig. 23 mit entgegen dem Uhrzeigersinn verfahrenem Stellglied,
- Fig. 26: die Vorrichtung gem. Fig. 25 in einer Schnittansicht etwa entlang einer Schnittlinie XXVI - XXVI in Fig. 25., und
- Fig 27: zeigt ein weiteres Ausführungsbeispiel der Erfindung, insbesondere gemäß der Ansprüche 17 bis 23, bei der die erfindungsgemäße Vorrichtung als Geschirrreinigungsanlage ausgebildet ist.

Das erfindungsgemäße Prinzip und die erfindungemäßen Besonderheiten der erfindungsgemäßen Vorrichtung und Verfahren werden nachfolgend anhand der in den Figuren dargestellten Ausführungsbeispiele näher beschrieben. Diesbezüglich ist anzumerken, dass der Übersichtlichkeit halber gleiche oder miteinander vergleichbare Teile oder Elemente mit gleichen Bezugszeichen, teilweise auch unter Hinzufügung kleiner Buchstaben bezeichnet sind.

Weiter sei für das weitere Verständnis der Patentanmeldung angemerkt, dass die in dieser Patentanmeldung verwendeten Begriffe "erstes Medium" und "zweites Medium" nur dazu dienen, zwei unterschiedliche Medien voneinander zu unterscheiden. Welches von zwei Medien das erste Medium ist und welches dieser beiden Medien als zweites Medium bezeichnet wird, ist für das Verständnis der vorliegenden Erfindung unbeachtlich. Die Begriffe können also auch vertauscht werden.

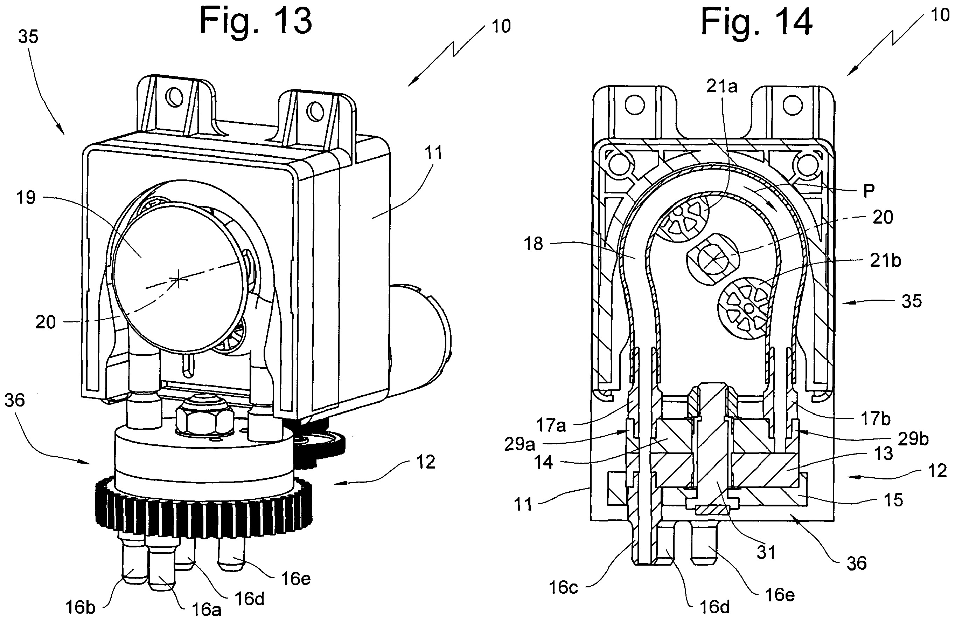

Die erfindungsgemäße Vorrichtung zur Förderung wenigstens eines Mediums ist in den Figuren in ihrer Gesamtheit insgesamt mit 12, ohne Berücksichtigung einer Pumpe, und mit 10 bezeichnet, sofern sie eine Pumpeneinheit 35 aufweist. Sie ist beispielsweise in Fig. 13 dargestellt.

Bei dem Ausführungsbeispiel der Figuren 13 bis 14 sowohl eine Pumpeneinheit 35 als auch eine Schalteinheit 36.

Die Vorrichtung 10 weist bei dem Ausführungsbeispiel der Fig. 13 ein Gehäuse 11 auf, welches zur Aufnahme der Pumpeneinheit 35 dient, aber auch zur Befestigung, oder, wie dies Fig. 14 zeigt, zur teilweise oder vollständigen Aufnahme der Schalteinheit 36 dienen kann.

Die Vorrichtung 10 kann beispielsweise raumfest, zum Beispiel wandseitig, montiert sein. Fig. 13 zeigt eine Ausführungsform, bei der sich das Gehäuse 11 nur bis an die Schalteinheit 36 heran erstreckt, wohingegen Fig. 14 eine leicht veränderte Ausführungsform zeigt, bei der das Gehäuse 11 sowohl die Pumpeneinheit 35 als auch die Schalteinheit 36 umschließt.

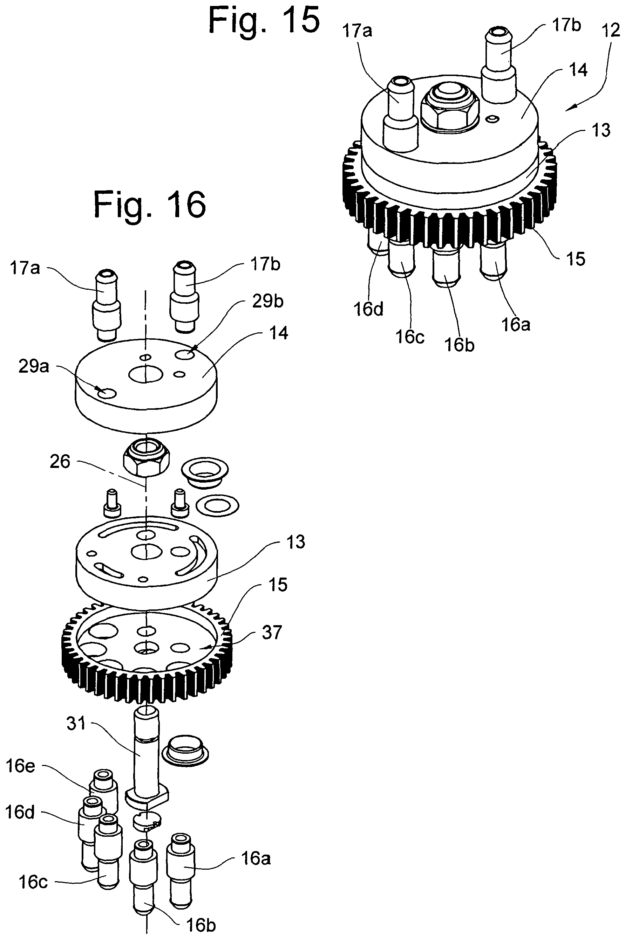

Die Schalteinheit 36 nimmt die Funktion einer Weiche 12 ein, und wird im vorliegenden Text daher teilweise auch als Weiche 12 bezeichnet. Die Weiche 12 umfasst, wie am besten in der Explosionsdarstellung der Figur 16 ersichtlich, zwei relativ zueinander verdrehbare Scheiben 13 und 14. Die Scheibe 14 wird im folgenden als Pumpenscheibe bezeichnet, da sie der Pumpeneinheit 35 benachbart angeordnet ist und die Scheibe 13 wird im folgenden als Medienscheibe oder Stellglied bezeichnet, da diese Scheibe 13 den nachfolgend noch zu beschreibenden Medieneingängen und Medienauslässen zu gewandt ist.

Die Medienscheibe 13 stellt das Stellglied einer Stelleinrichtung bereit und ist um die Mittelachse 26 drehbar. Während die Pumpenscheibe 14 relativ zu der Pumpeneinheit 35 bei dem Ausführungsbeispiel festgehalten ist, ist das Stellglied 13 unter Zuhilfenahme eines Ritzels oder Zahnrades 15, welches drehfest mit dem Stellglied 13 ausgebildet ist, von einem nicht dargestellten Antrieb, unter Zuhilfenahme eines nicht dargestellten Antriebzahnrades, antreibbar.

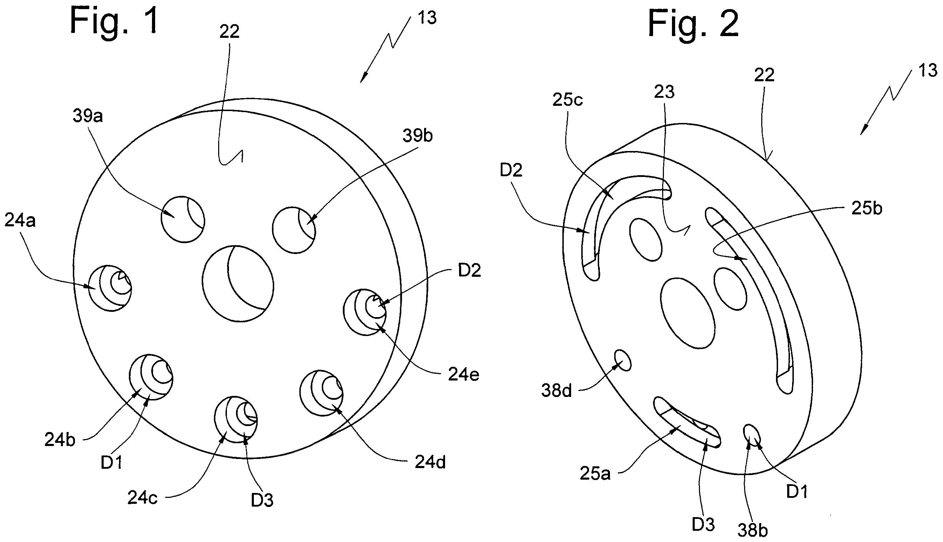

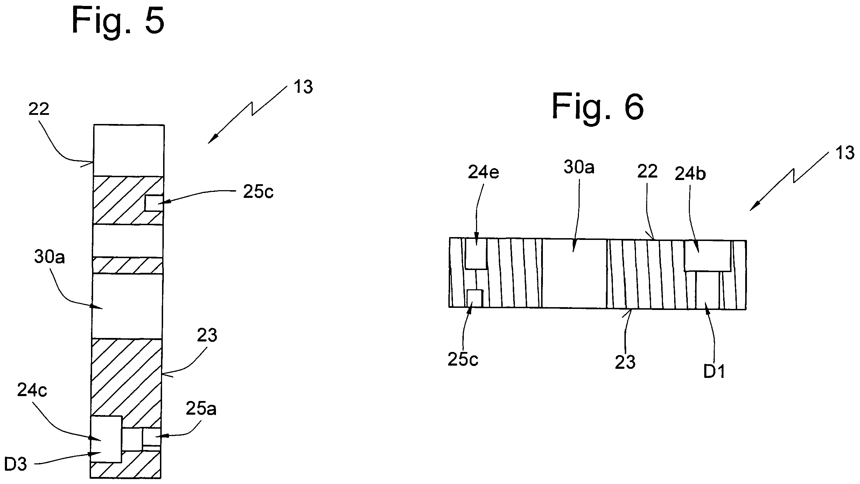

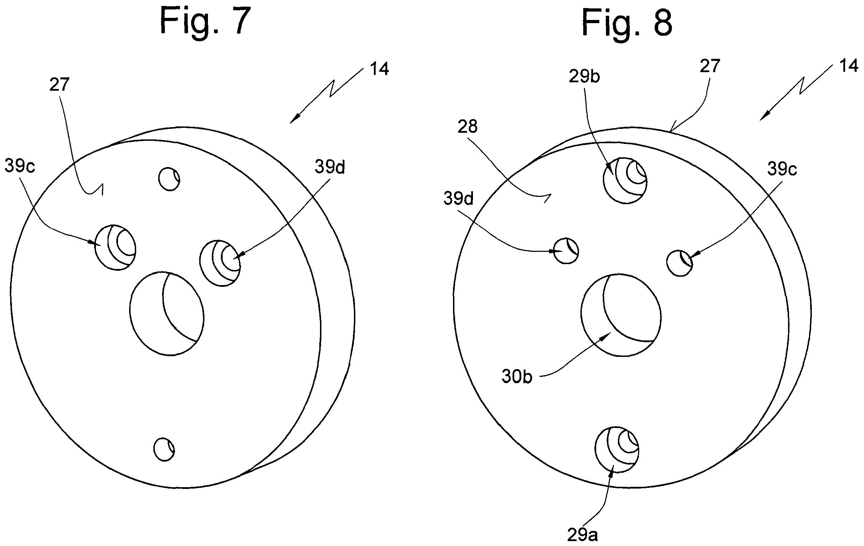

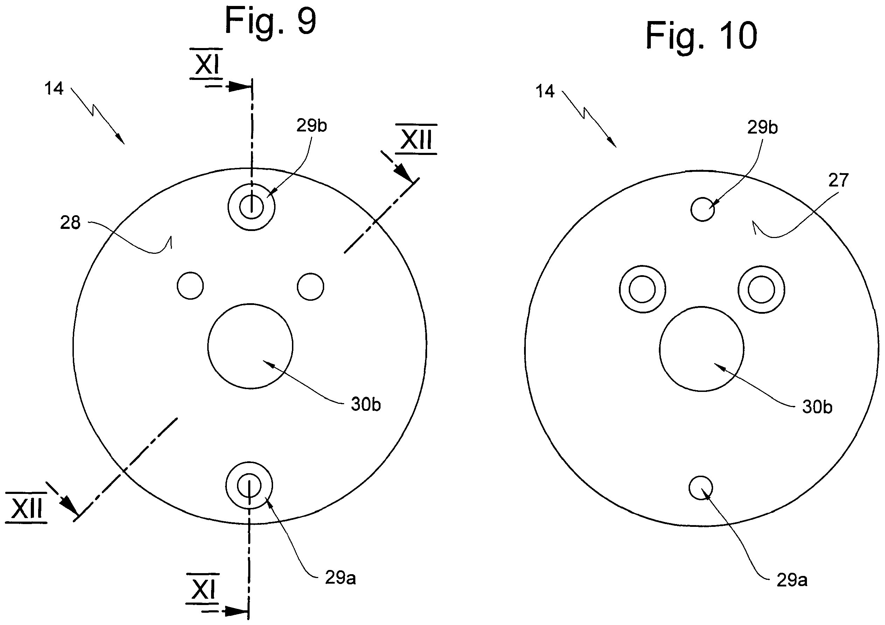

Fig. 16 zeigt, dass das Stellglied 13 in einem Aufnahmefach 37 des Ritzels 15 aufgenommen werden kann. Zum besseren Verständnis der später noch zu erläuternden Leitungswege wird jedoch zunächst die Medienscheibe 13, also das Stellglied, anhand der Figuren 1 bis 6 in Alleinstellung und sodann die Pumpenscheibe 14 anhand der Figuren 7 bis 12 in Alleinstellung beschrieben.

Fig. 1 zeigt das Stellglied 13 mit seiner Vorderseite 22. Die Seite 22 ist im montierten Zustand der Weiche 12 den Medieneingängen zugewandt. Hierzu sind fünf sacklochartige Bohrungen 24a, 24b, 24c, 24d, 24e in dem Stellglied 13 eingebracht, wobei sich diese sacklochartigen Bohrungen zur Vorderseite 22 hin erweitern. Diese Bohrungen 24a, 24b, 24c, 24d, 24e dienen dem Anschluss von Anschlussstutzen 16a, 16b, 16c, 16d, 16e, wie sie beispielsweise in Fig. 16 dargestellt sind. Die jeweiligen Stutzen 16 werden mit ihren der Weiche 12 zugewandten Enden auf bekannte herkömmliche Weise in die Öffnungen 24a 24b, 24c, 24d, 24e eingesetzt und dort sicher und fest verankert.

An diesen Stutzen 16 können auf nicht dargestellte, herkömmliche Weise Schlauchleitungen angeschlossen werden, um die Weiche 12 mit den entsprechenden Medienvorräten oder Zielbehältnissen zu verbinden.

An dieser Stelle sei darauf hingewiesen, dass der Stutzen 16a der Verbindung der Weiche 12 mit einem Zielbehältnis für ein erstes Medium dient, und der Stutzen 16e zur Verbindung der Weiche 12 mit einem zweiten Zielbehältnis für ein zweites Medium dient.

Der Stutzen 16b wird mit dem Medienvorrat des zweiten Mediums verbunden, und der Stutzen 16d wird mit dem Medienvorrat des ersten Mediums verbunden.

Der Stutzen 16c wird mit dem Vorrat eines Spülmediums verbunden.

Unter der Annahme, dass die erfindungsgemäße Vorrichtung 10 in einer gewerblichen Geschirrspüleinrichtung eingesetzt wird, kann das erste Medium von einem herkömmlichen Reiniger gebildet sein, und das zweite Medium von einem Klarspüler. Als Spülmedium kann Wasser eingesetzt werden.

Zurückkommend zu den Figuren 1 bis 6 soll des weiteren die Rückseite 23 des Stellgliedes 13 erläutert werden: Man erkennt auf der Rückseite 23 zwei Öffnungen 38b und 38d. Diese stehen mit den Anschlussöffnungen 24b bzw. 24d in unmittelbarer kommunikativer Verbindung und bilden jeweils einen Durchgangskanal durch das Stellglied 13 aus, wobei der die Öffnungen 24b und 38b verbindende Kanal mit D1 bezeichnet ist.

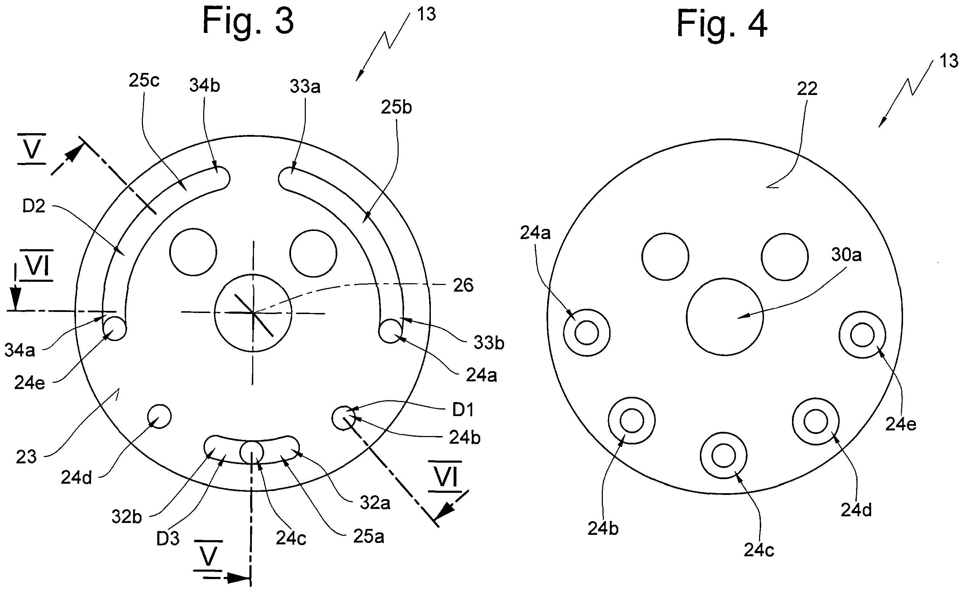

Darüber hinaus erkennt man in Figuren 2 und 3 auf der Rückseite 23 des Stellgliedes 13 drei kreisbogenförmige Nuten 25a, 25b, 25c.

Die Nut 25a steht mit der Anschlussöffnung 24c auf der gegenüberliegenden Seite 22 des Stellgliedes 13 in kommunikativer Verbindung und bildet mit dieser einen weiteren Durchgangskanal D3 durch das Stellglied 13 aus. Die Nut 25b steht mit der Öffnung 24a in kommunikativer Verbindung und bildet mit ihr einen Durchgangskanal aus und die Nut 25c steht mit der Öffnung 24e in kommunikativer Verbindung und bildet mit ihr den Durchgangskanal D2 aus.

Insgesamt weist das Stellglied 13 bei diesem Ausführungsbeispiel also fünf Durchgangskanäle auf.

Lediglich der Vollständigkeit halber sei angemerkt, dass das Stellglied 13 bei dem Ausführungsbeispiel der Fig. 1 bis 6 außerdem noch Öffnungen 39a und 39b aufweist, die jedoch vorliegend ohne Bedeutung sind und nur während der Montage der Weiche 12 genutzt werden. Auf diese Öffnungen 39a und 39b kann auch grundsätzlich verzichtet werden.

Schließlich sei darauf hingewiesen, dass das Stellglied 13 eine Mittelbohrung 30a aufweist, die im zusammengebauten Zustand der Weiche 12 von einem Bolzen 31 durchsetzt wird. Der Bolzen 31 durchsetzt dabei zugleich auch die Mittelöffnung 30b in der Pumpenscheibe 14, die nun nachfolgend beschrieben wird.

Die Pumpenscheibe 14 weist die bereits erwähnte Mittelbohrung 30b zur Aufnahme des Bolzens 31 auf. Des weiteren weist die Pumpenscheibe 14 Durchgangsbohrungen 39c und 39d auf, die für die vorliegenden Erfindung ebenfalls unbeachtlich sind und lediglich der Befestigung der Pumpenscheibe 14 relativ zu der Pumpeneinheit 35 dienen.

Des weiteren weist die Pumpenscheibe 14 auf ihrer Rückseite 28 eine Bohrung 29a und, etwa 180° gegenüberliegend, eine zweite Bohrung 29b auf. Die Bohrungen sind jeweils als Durchgangskanal ausgebildet und erstrecken sich bis zur Vorderseite 27 der Pumpenscheibe 14.

Die Pumpenscheibe 14 ist mit der Rückseite 28 der Pumpeneinheit 35 zugewandt und ermöglicht in den sacklochartigen Bohrungen 29a und 29b das Aufnehmen entsprechender Stutzen 17a, 17b zur Verbindung mit dem Schlauch 18 einer Schlauchpumpe 35.

Die Pumpeneinheit 35 weist ein drehbares Element 19 auf, welches um eine Drehachse 20 drehbar ist. Drehbar mit dem Element 19 sind eine erste Rolle 21a und eine zweite Rolle 21b. Die Rollen sind in Fig. 14 lediglich teilweise dargestellt und rollen sich, wie bei herkömmlichen Schlauchpumpen 35 bekannt, auf der Außenseite des Schlauches 18 ab, quetschen diesen unter sich linienartig zusammen, und fördern auf diese Weise das in dem Schlauch 18 befindliche Medium.

Unter der Annahme, dass das Drehglied 19 bezogen auf die Fig. 14 im Uhrzeigersinn um die Mittelachse 20 rotiert und die beiden Rollen im Uhrzeigersinn mit nimmt, wobei lediglich die Drehachsen der Rollen 21a, 21b im Uhrzeigersinn mit genommen werden, die Walzen sich aber dementsprechend unter Rotation entgegen dem Uhrzeigersinn um ihre jeweilige Drehachse auf der Außenfläche des Schlauches 18 abrollen, wird das in der Schlauchleitung 18 befindliche Medium entlang der Richtung des Pfeils P, also vom Stutzen 17a hin zum Stutzen 17b, gefördert. Demzufolge wird die in Fig. 14 mit 29a bezeichnete Öffnung an der Weiche 12 als Pumpenausgang der Weiche 12 und die in Fig. 14 mit 29b bezeichnete Öffnung an der Pumpenscheibe 14 als Pumpeneingang bezeichnet.

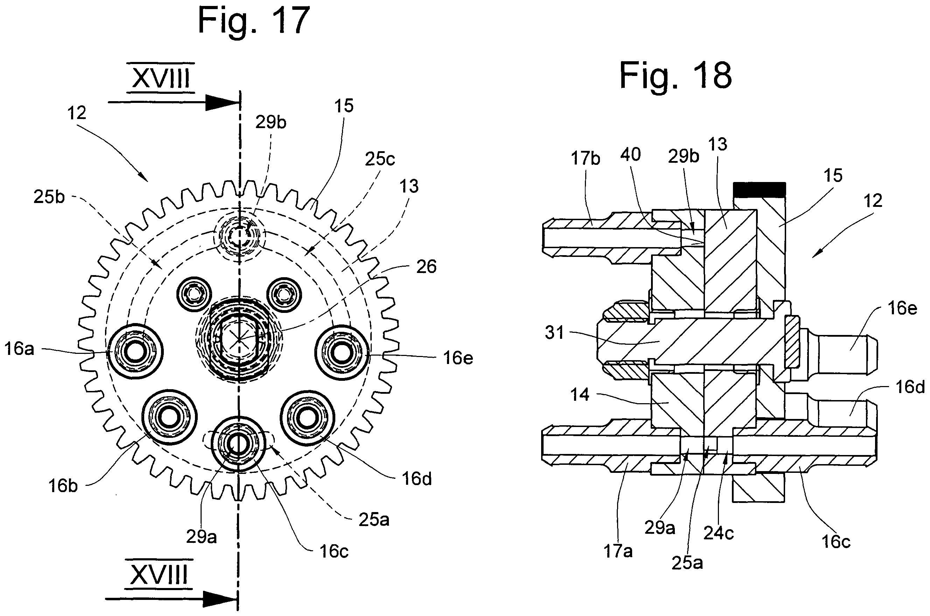

Im folgenden soll unter Bezugnahme auf die Figuren 17 bis 26 die Funktionsweise der erfindungsgemäßen Weiche 12 im Hinblick auf die unterschiedlichen Stellpositionen des Stellgliedes 13 erläutert werden:

Fig. 17 zeigt die Weiche 12 in einer teilgeschnittenen schematischen Ansicht. In Zusammenschau der Figuren 17 bis 26 soll nachfolgend verdeutlicht werden, wie in Folge einer Änderung der Position des Stellgliedes 13 jeweils unterschiedliche Leitungswege durch die Weiche 12 hindurch bereit gestellt werden.

Fig. 17 und 18 zeigen eine Ausgangsposition des Stellgliedes 13, bei der der Pumpenausgang 29a mit der Nut 25a, und damit mit dem Spülmediumeingang 16c bzw. der zugehörigen Öffnung 24c in kommunikativer Verbindung steht. Der Pumpenausgang 29d wird in dieser Position des Stellgliedes 13 von einer Sperrfläche 40 gesperrt.

Im übrigen sind bei dieser Drehposition des Stellgliedes 13 auch die Öffnungen 38b, 38d und die beiden Nuten 25b und 25c von der Rückseite 28 der Pumpenscheibe 14 gegenüber dem Außenraum sicher abgedichtet.

Da sowohl die Pumpenscheibe 14 als auch das relativ dazu drehbare Stellglied 13 aus einem geeigneten keramischen Material bestehen, und aufeinander zugespannt sind, ist die geforderte Dichtfunktion ohne weiteres erreichbar.

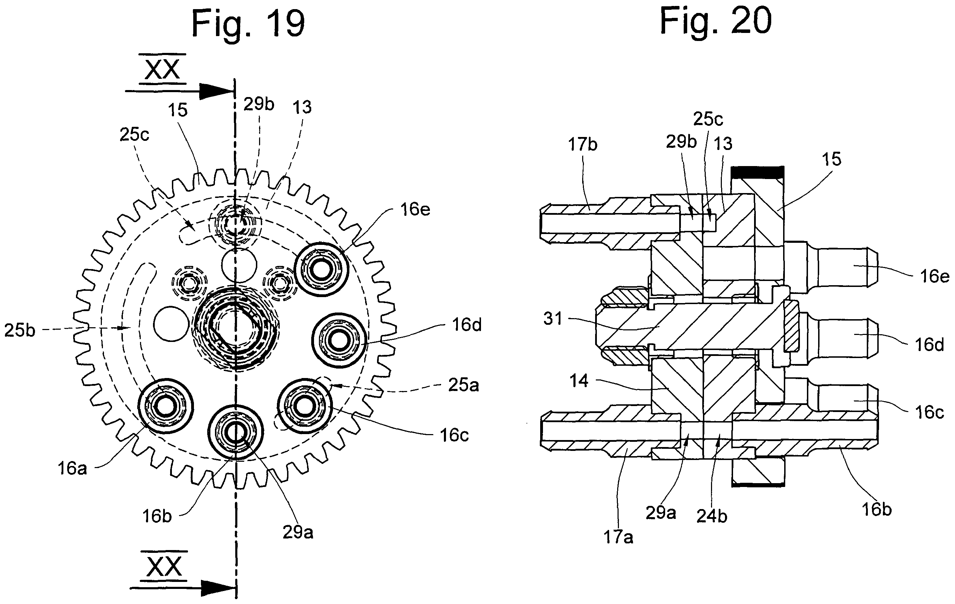

Ausgehend von der Position des Stellgliedes 13 gemäß Figur 17 soll nun angenommen werden, dass das Stellglied 13 um seine Mittelachse 26 entgegen dem Uhrzeigersinn um etwa 41,5 ° verdreht wird. In dieser Drehposition gemäß Fig. 19 ist der Medieneingang 16b für das zweite Medium, bzw. auch die Anschlussöffnung 24b für das zweite Medium, mit dem Pumpenausgang 29a in kommunikative Verbindung gebracht worden.

Zugleich ist der Pumpeneingang 29b jetzt derartig relativ zu der Nut 25c positioniert, dass der Pumpeneingang 29b in kommunikativer Verbindung zu dem Ausgang 24e für das zweite Medium steht, sowie gleichermaßen in kommunikativer Verbindung zu dem entsprechenden Stutzen 16e, der zu dem Zielbehältnis für das zweite Medium führt.

In dieser Drehposition des Stellgliedes 13 kann die Pumpeneinheit 35 das zweite Medium von dem entsprechenden Medieneingang 24b zu dem entsprechenden Medienausgang 24e fördern.

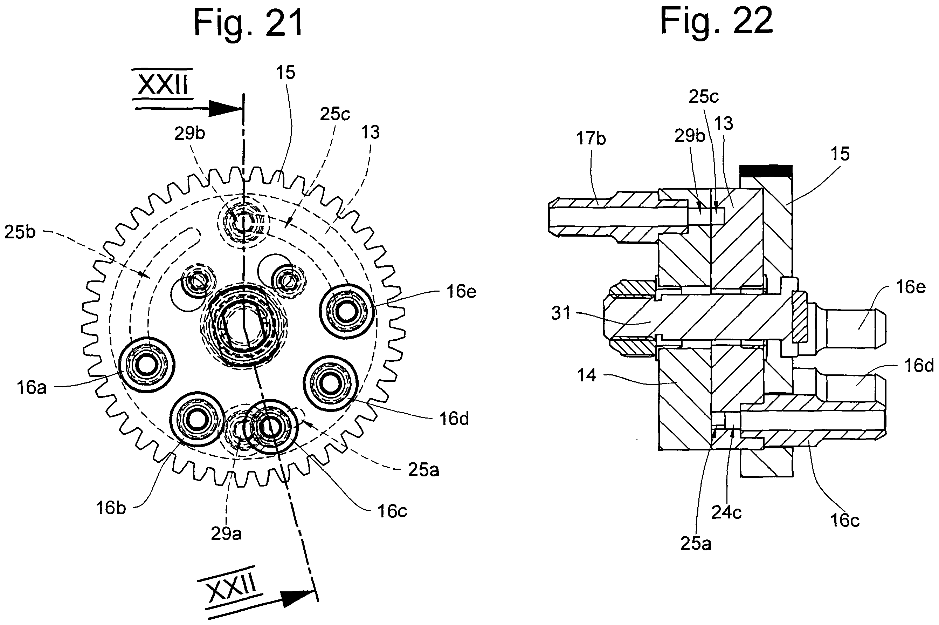

Wenn das entsprechende Volumen an zweitem Medium gefördert worden ist, kann die Pumpe 35 angehalten werden und ausgehend von der Position gemäß Fig. 19 das Stellglied 13 im Uhrzeigersinn um einen Winkel von 26,5 ° gedreht werden, so dass eine Drehposition erreicht wird, in der, wie in Fig. 21 dargestellt, sich nunmehr der Spülmediumeingang 24c in kommunikativer Verbindung mit dem Pumpenausgang 29a befindet, weil das bzgl. Fig. 1 linke Ende der Nut 25a die entsprechende Pumpenausgangsöffnung 29a überdeckt. Zugleich befindet sich die dem Pumpeneingang 29b zugehörige Öffnung der Pumpenscheibe 14 am bzgl. Fig. 21 linken Ende der Nut 25c, so dass diese Drehposition auch eine kommunikative Verbindung zwischen dem Pumpeneingang 29b und dem Auslass 24e für das zweite Medium bereit stellt. In dieser Drehposition des Stellgliedes 13 kann die Pumpeneinheit 35 Spülmedium durch den Schlauch 18 fördern, und auf diese Weise den Schlauch 18 spülen.

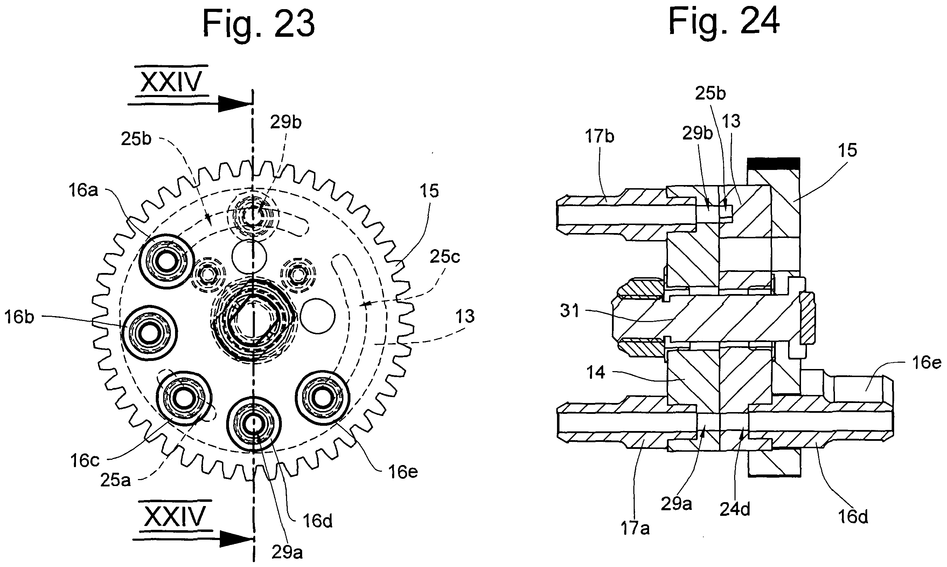

Um nun ein anderes Medium, nämlich in der Terminologie der vorliegenden Patentanmeldung, das erste Medium, fördern zu können, wird ausgehend von der Drehposition des Stellgliedes 13 gemäß Figur 21 das Stellglied 13 im Uhrzeigersinn um einen Winkel von ca. 59,5 ° verdreht, bis eine Position gemäß Figur 23 erreicht wird. In dieser Drehposition des Stellglieds 13 befindet sich die Einlassöffnung 24d für das erste Medium in fluchtender Anordnung zu dem Pumpenausgang 29a. Zugleich befindet sich die Nut 25b in fluchtender Anordnung zu dem Pumpeneingang 29b, so dass zwischen dem Pumpeneingang 29b und dem Auslass 24a für das erste Medium gleichermaßen eine kommunikative Verbindung besteht.

In dieser Drehposition des Stellgliedes 13 kann durch die Pumpeneinheit 35 das erste Medium von dem Medieneingang 24d zu dem Medienausgang 24a gefördert werden.

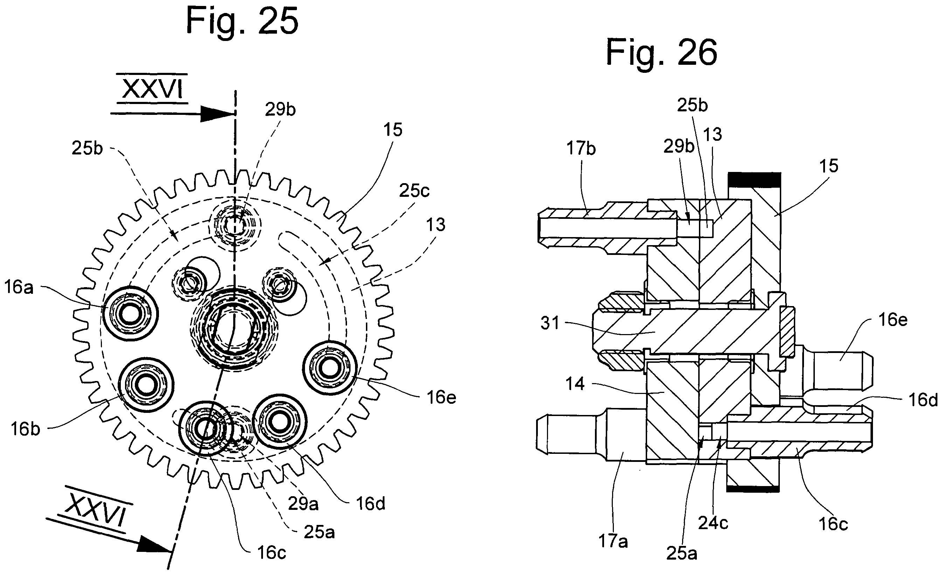

Wird ausgehend von Fig. 23 das Stellglied 13 entgegen dem Uhrzeigersinn um ca. 19,5 ° verdreht, kommt die Nut 25a in Überdeckung mit dem Pumpenausgang 29a. Mithin steht jetzt, wie in Fig. 25 erkennbar, der Pumpenausgang 29a in kommunikativer Verbindung mit dem Spülmediumeingang 24c. Zugleich ist in dieser Drehposition die Nut 25b in Überdeckung mit dem Pumpeneingang 29b, so dass auch hier der Pumpeneingang 29b in kommunikativer Verbindung mit dem Medienausgang 24a für das erste Medium steht. Wiederum kann nun die Pumpe 35 betrieben werden, um das Spülmedium durch die Pumpeneinheit 35 hindurch zu fördern und insbesondere den Schlauch 18 zu spülen.

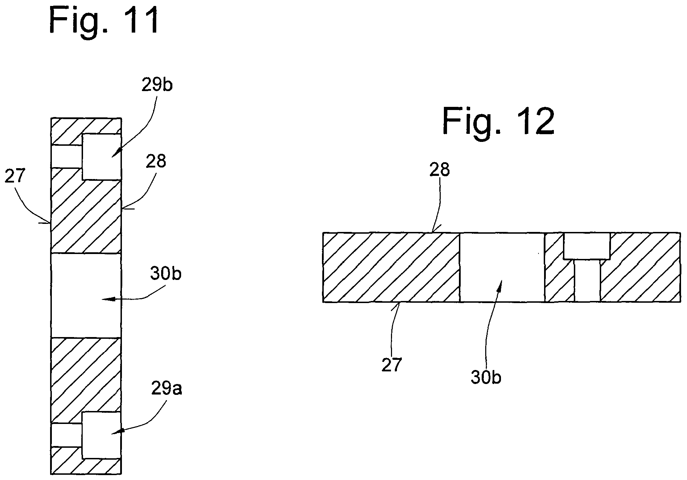

Unter der Annahme, dass das erste Medium von einem Reiniger und das zweite Medium von einem Klarspüler und das Spülmedium von Wasser gebildet ist, kann bei Einsatz der erfindungsgemäßen Vorrichtung gemäß Fig. 12 in einer Geschirrspülanlage das erfindungsgemäße Verfahren wie folgt betrieben werden: Zunächst wird zu dem Zeitpunkt, zu dem Reiniger in die Geschirrspülmaschine eingetragen werden soll, das Stellglied in eine Drehposition gem. Fig. 19 verfahren. Sobald das erforderliche Volumen an Reiniger eingetragen worden ist, wird zum Zwecke der Spülung das Stellglied in eine Position gem. Fig. 21 verfahren. Dabei kann eine geringe Menge an Wasser ausreichen, um die Leitungswege, insbesondere die Leitungswege innerhalb der Pumpeneinheit 35, ausreichend zu spülen.

Wird zu einem späteren Zeitpunkt während des Geschirr-Reinigungsprozesses Klarspüler benötigt, wird ausgehend von der Position gemäß Fig. 21 das Stellglied in einer Position gemäß Fig. 23 verfahren, und sodann mit dieser Pumpe der Klarspüler, also das zweite Medium, von dem zugehörigen Medieneingang 16d zu dem zugehörigen Medienausgang 16a gefördert. Nachfolgend wird die Vorrichtung 12 angesprochen und das Stellglied in eine Position gemäß Fig. 25 verfahren, damit wiederum eine Spülung der Leitungen mit Wasser erfolgen kann.

Jeweils nach einem Spülschritt kann die Vorrichtung auch in eine Ruheposition gemäß Fig. 17 zurück fahren, in der der Pumpeneingang 29b gegenüber dem Stellglied 13 sicher abgedichtet und verschlossen ist.

Wie beschrieben, verfügt das Stellglied 13 bei diesem Ausführungsbeispiel über fünf Durchgangskanäle. Zwei dieser Durchgangskanäle dienen der Leitung und Förderung des ersten bzw. zweiten Mediums von dem entsprechenden Medieneingang hin zu dem Pumpenausgang und ein dritter Durchgangskanal dient zur Leitung bzw. Förderung des Spülmediums von dem entsprechenden Spülmedieneingang zu dem Pumpenausgang.

Die beiden weiteren Durchgangskanäle dienen zur Förderung der Medien bzw. des Spülmediums vom Pumpeneingang zu dem entsprechenden Medienausgang.

Lediglich durch Ansprechen des Stellgliedes 13 und einer Veränderung der entsprechenden Drehposition kann die Schaltung der Leitungswege erreicht werden.

Insbesondere für den Fall, dass die erfindungsgemäße Vorrichtung für den Einsatz in einer Geschirrreinigungsanlage ausgebildet ist, kann der Spülmedieneingang 24c bzw. der zugehörige Anschlussstutzen 16c mit einem Wasserbehältnis verbunden sein, welches z. B. einem Boiler der Geschirrreinigungsanlage zugeordnet ist. Dort kann beispielsweise eine Art Becher vorhanden sein, der aus dem Zulauf des Boilers Wasser abzweigt, beispielsweise eine für eine Spülung der Leitungen erforderliche Wassermenge. Jedes Mal, wenn der Boiler angesprochen werden kann, also jedes Mal, wenn ein Reinigungsvorgang durch die Reinigungsanlage initiiert wird, kann die erforderliche Menge Wasser für eine spätere Spülung abgezweigt werden.

Die Erfindung wurde anhand der Ausführungsbeispiele beschrieben unter der Annahme, dass ein Medieneingang der Weiche 12 für ein erstes Medium immer nur mit einem Medienausgang der Vorrichtung für dieses Medium und einer anderer Medieneingang für ein anderes Medium nur mit einem anderen Medienausgang für dieses andere Medium verbunden werden soll.

Die Erfindung ist allerdings nicht beschränkt auf Anwendungsfälle, bei denen zwei Medieneingänge jeweils eindeutig einem von zwei Medienausgängen zuordnenbar sind, sondern umfasst auch Ausführungsbeispiele, bei denen die Zahl der Medieneingänge kleiner oder größer als zwei ist und die Zahl der Medienausgänge der Zahl der Medieneingänge entspricht.

Schließlich sind von der Erfindung auch umfasst solche Vorrichtungen, bei denen die Zahl der Medieneingänge und die Zahl der Medienausgänge voneinander abweichen.

Bei den Ausführungsbeispielen gemäß der Zeichnungen ist die Pumpenscheibe 14 fest relativ zu der Pumpeneinheit 35 angeordnet. Demzufolge muss zur Drehung des Stellgliedes 13 immer auch eine Drehung des Schlauchbaumes erfolgen. Bei einer alternativ nicht dargestellten Ausführung der Erfindung ist vorgesehen, dass das Stellglied 13 und damit auch die Mehrzahl der Stutzen 16a, 16b, 16c, 16d, 16e festgehalten wird und statt dessen relativ dazu die Pumpenscheibe 14 verdreht wird. Dabei ist auch denkbar, dass, entgegen dem Ausführungsbeispiel der Figuren, bei dem die Pumpenscheibe 14 fest relativ zu dem Gehäuse 11 angeordnet ist, statt dessen das Stellglied 13 fest relativ zu dem Gehäuse angeordnet und die Pumpenscheibe 14 relativ zu dem Stellglied 13 drehbar ist.

Schließlich sind von der Erfindung auch Ausführungsformen umfasst, bei denen eine aus drei Scheiben oder Gehäuseteilen zusammen gesetzte Anordnung derart vorgesehen ist, dass das Stellglied 13 von einer zwischen zwei festgehaltenen Scheibenpaaranordnung mittig eingefasst wird und drehbar relativ zu den beiden außen liegenden und festgehaltenen Scheiben angeordnet ist.

Als einen zweiten wesentlichen Anwendungsfall für die Erfindung ist eine Reinigungs- und Desinfektionseinrichtung zu nennen, bei der beispielsweise zu desinfizierende Gegenstände zu reinigen und zu desinfizieren sind, wobei beispielsweise das erste Medium von einer Reinigungsflüssigkeit und das zweite Medium von einer Desinfektionsflüssigkeit gebildet ist.

Es soll an dieser Stelle darauf hingewiesen werden, dass die konkrete Ausgestaltung der Durchgangskanäle, insbesondere auch die Länge der Nuten, die im Rahmen einer Verstellbewegung des Stellgliedes zu beachtenden Drehwinkel und auch die Zahl der Durchgangskanäle und der Eingänge und Ausgänge entsprechend der Anforderungen an die erfindungsgemäße Vorrichtung 12 vom Fachmann geeignet wählbar sind.

Schließlich sei auch angemerkt, dass die erfindungsgemäße Vorrichtung 12 auch die Möglichkeit bereit stellt, unterschiedliche Spülmedien zu verwenden, wenn beispielsweise ein erstes Medium mit einem ersten Spülmedium ausgespült oder neutralisiert werden muss und ein zweites Medium mit einem zweiten Spülmedium oder Neutralisationsmedium gespült oder neutralisiert werden muss. Entsprechend der Zahl der zu verwendenden unterschiedlichen Spülmedien muss nur eine entsprechende Zahl an Spülmediumeingängen an der Vorrichtung 12 vorgesehen werden und eine entsprechende Zahl an Durchgangskanälen vorgesehen werden, wobei alternativ auch denkbar ist, dass ein Durchgangskanal für Spülmedium wahlweise mit unterschiedlichen Spülmediumeingängen in kommunikative Verbindung bringbar ist.

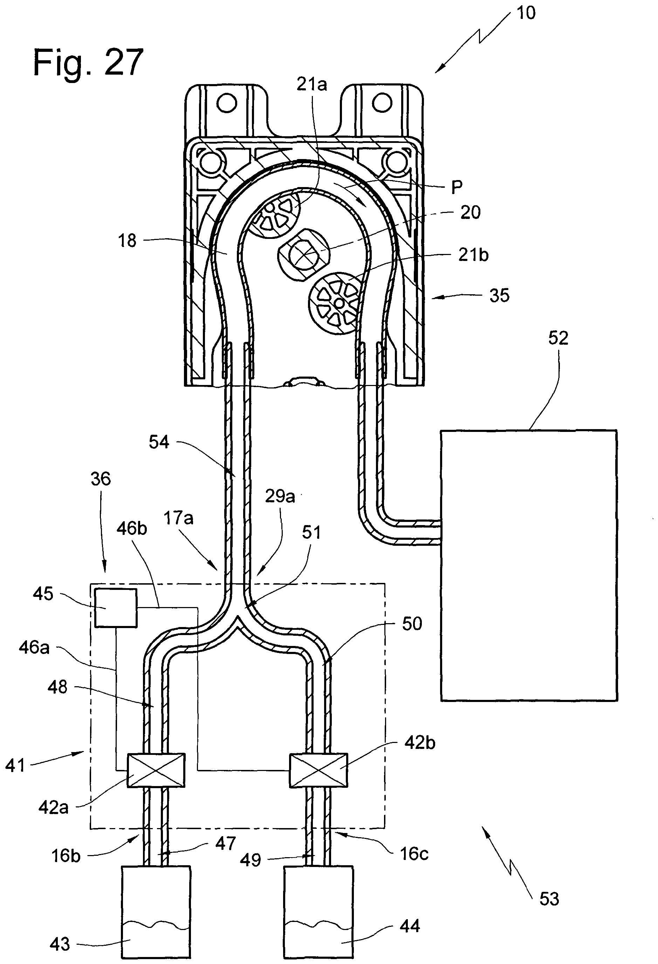

Fig 27 zeigt ein weiteres Ausführungsbeispiel der Erfindung, insbesondere gemäß der Ansprüche 17 bis 23, bei der die erfindungsgemäße Vorrichtung 10 als Bestandteil einer Geschirrreinigungsanlage, die insgesamt mit 53 bezeichnet ist, ausgebildet ist.

Die Schalteinheit 36, die insgesamt, gestrichelt angedeutet, auch als Stelleinrichtung 44 bezeichenbar ist, umfasst bei diesem Ausführungsbeispiel zwei Sperreinrichtungen 42a, 42b. Ein Vorratsbehältnis 43 für das Medium ist über eine Leitung 47 und über den Mediumeingang 16b mit der zugehörigen Sperreinrichtung 42a und diese wiederum über die Leitung 48 mit dem Pumpenausgang 29a verbunden. Ein Vorratsbehältnis 44 für das Spülmedium ist über eine Leitung 49 und über den Spülmediumeingang 16c mit der zugehörigen Sperreinrichtung 42b und diese wiederum über die Leitung 50 ebenfalls mit dem Pumpenausgang 29a verbunden. Der Pumpenausgang 29a der Stelleinrichtung 41 ist, anders ausgedrückt, gebildet von einem Verbindungsbereich 51 der beiden Leitungsabschnitte 48 und 50. Der Pumpenausgang 29a ist wiederum der Eingangsseite der Pumpeneinheit 35 zugewandt. Die Ausgangsseite der Pumpeneinheit 35 ist unmittelbar mit dem Zielbehältnis 52, bei diesem Ausführungsbeispiel einem Reinigerlösungstank oder einem Geschirraufnahmeraum einer gewerblichen Geschirrspülmaschine verbunden.

Die Sperreinrichtungen können den sie betreffenden Leitungsweg nur öffnen oder schliessen. Es kann sich mithin um einfache Ventile handeln.

Die Sperreinrichtungen sind über Steuerleitungen 46a, 46b derart von einer Steuerung 45 ansprechbar, dass eine Spülung der Leitungswege innerhalb der Pumpeneinheit 35 mit dem Spülmedium vorgenommen wird, nachdem ein Eintrag von Medium (z. B. Reiniger oder Klarspülmittel) in die Leitungswege innerhalb der Pumpe 35 oder in die Leitungswege stromabwärts der Stelleinrichtung 41 vorgenommen worden ist. Insbesondere vorteilhaft wird eine Spülung der Leitungswege innerhalb der Pumpeneinheit 35 mit dem Spülmedium jedes Mal vorgenommen, nachdem ein Eintrag von Medium (Reiniger oder Klarspülmittel) in die Leitungswege innerhalb der Pumpe oder in die Leitungswege stromabwärts der Stelleinrichtung vorgenommen worden ist. Die Steuerung 45 ist insoweit auf nicht dargestellte Weise auch mit einer nicht dargestellten Steuerung der Pumpe 35 verbunden.

Die Steuerung 45 kann auch mit einer nicht dargestellten Steuerung der Geschirrreinigungsanlage 53 zusammenwirken oder Teil einer solchen Steuerung sein.

## Patentansprüche

1. Vorrichtung (10, 12) zur schaltbaren Förderung wenigstens eines Mediums, umfassend einen Mediumeingang (24b, 16b), für das Medium, der mit einem Mediumvorrat verbindbar ist, einen Mediumausgang (24e, 16e) für das Medium, der mit einem Zielbehältnis für das Medium verbindbar ist, einen Spülmediumeingang (24c, 16c), der mit einem Spülmediumvorrat verbindbar ist, einen Pumpenausgang (29a), der mit einer Eingangsseite einer Pumpe (35) verbindbar ist, **gekennzeichnet durch** einen Pumpeneingang (29b), der mit einer Ausgangsseite der Pumpe (35) verbindbar ist, sowie weiter umfassend ein Stellglied (13), welches in einer ersten Stellposition (Fig. 19) eine kommunikative Verbindung zwischen dem Mediumeingang (24b) und dem Pumpenausgang (29a) sowie zugleich zwischen dem Pumpeneingang (29b) und dem Mediumausgang (24e) bereitstellt, und welches in einer zweiten Stellposition (Fig. 21) eine kommunikative Verbindung zwischen dem Spülmediumeingang (24c) und dem Pumpenausgang (29a) sowie zugleich zwischen dem Pumpeneingang (29b) und dem Mediumausgang (24e) bereitstellt.

2. Vorrichtung nach Anspruch 1, **dadurch gekennzeichnet, dass** das in erster Stellposition befindliche Stellglied (13) zugleich eine kommunikative Verbindung zwischen dem Spülmediumeingang (24c) und dem Pumpenausgang (29a) sperrt.

3. Vorrichtung nach Anspruch 1 oder 2, **dadurch gekennzeichnet, dass** das in zweiter Stellposition befindliche Stellglied (13) zugleich eine kommunikative Verbindung zwischen dem Mediumeingang (24b) und dem Pumpenausgang (29a) sperrt.

4. Vorrichtung nach einem der vorangegangenen Ansprüche, **dadurch gekennzeichnet, dass** die Vorrichtung einen zweiten Mediumeingang (16d, 24d) für ein zweites Medium umfasst, der mit einem zweiten Mediumvorrat verbindbar ist, und einen zweiten Mediumausgang (16a, 24a) für das zweite Medium, der mit einem Zielbehältnis für das zweite Medium verbindbar ist, wobei das Stellglied (13) in einer dritten Stellposition (Fig. 23) eine kommunikative Verbindung zwischen dem zweiten Mediumeingang (16d, 24d) und dem Pumpenausgang (29a) sowie zugleich eine kommunikative Verbindung zwischen dem Pumpeneingang (29b) und dem zweiten Mediumausgang (16a, 24a) bereitstellt, und welches in einer vierten Stellposition (Fig. 25) eine kommunikative Verbindung zwischen dem Spülmediumeingang (16c, 24c) und dem Pumpenausgang (29a) sowie zugleich eine kommunikative Verbindung zwischen dem Pumpeneingang (29b) und dem zweiten Mediumausgang (16a, 24a) bereitstellt.

5. Vorrichtung nach einem der vorangegangenen Ansprüche, **dadurch gekennzeichnet, dass** das Stellglied (13) einen Durchgangskanal (D2) aufweist, der den Pumpeneingang (29b) mit dem Mediumausgang (16e, 24e) bei in erster Stellposition befindlichem Stellglied (13) und bei in zweiter Stellposition befindlichem Stellglied miteinander verbindet.

6. Vorrichtung nach Anspruch 5, **dadurch gekennzeichnet, dass** der Durchgangskanal (D2) an seinem dem Pumpeneingang (29b) zugewandten Ende einen ersten Mündungsbereich (34a) und einen zweiten Mündungsbereich (34b) aufweist.

7. Vorrichtung nach Anspruch 6, **dadurch gekennzeichnet, dass** die beiden Mündungsbereiche (34a, 34b) von einer gemeinsamen Nut (25c) bereitgestellt sind.

8. Vorrichtung nach einem der vorangegangenen Ansprüche, **dadurch gekennzeichnet, dass** das Stellglied (13) drehbar angeordnet ist, und unterschiedliche Stellpositionen des Stellglieds unterschiedlichen Drehpositionen des Stellgliedes entsprechen.

9. Vorrichtung nach einem der vorangegangenen Ansprüche, **dadurch gekennzeichnet, dass** das Stellglied im wesentlichen scheibenförmig, insbesondere kreisscheibenförmig, ausgebildet ist.

10. Vorrichtung nach einem der vorangegangenen Ansprüche, **dadurch gekennzeichnet, dass** der Medieneingang (16d, 24d) und der Medienausgang (16a, 24a) auf einer ersten Seite (22) des Stellglieds (13), und der Pumpenausgang (29a) und der Pumpeneingang (29b) auf der anderen Seite (23) des Stellglieds angeordnet sind.

11. Vorrichtung nach einem der vorangegangenen Ansprüche, **dadurch gekennzeichnet, dass** das Stellglied auf seiner der Pumpe (35) zugewandten Seite zumindest eine der Zahl der Medieneingänge entsprechende Zahl von Nuten (25b, 25c) aufweist.

12. Vorrichtung nach einem der vorangegangenen Ansprüche, **dadurch gekennzeichnet, dass** das Stellglied (13) aus keramischem Material besteht.

13. Vorrichtung nach einem der vorangegangenen Ansprüche, **dadurch gekennzeichnet, dass** die Pumpe (35) von einer Schlauchpumpe bereitgestellt ist.

14. Vorrichtung nach Anspruch 14, **dadurch gekennzeichnet, dass** ein Schlauch (18) der Schlauchpumpe (35) nach jedem Mediumeintrag von Spülmedium durchspülbar ist.

## Claims

1. Device (10, 12) for controllably conveying at least one medium, comprising a medium inlet (24b, 16b) for the medium which can be connected to a medium supply, a medium outlet (24e, 16e) for the medium which can be connected to a target container for the medium, a rinsing medium inlet (24c, 16c) which can be connected to a rinsing medium supply, a pump outlet (29a) which can be connected to an inlet side of a pump (35), **characterised by** a pump inlet (29b) which can be connected to an outlet side of the pump (35), and further comprising a control element (13) which establishes a communicative connection between the medium inlet (24b) and the pump outlet (29a) and simultaneously between the pump inlet (29b) and the medium outlet (24e) in a first control position (Fig. 19), and which establishes a communicative connection between the rinsing medium inlet (24c) and the pump outlet (29a) and simultaneously between the pump inlet (29b) and the medium outlet (24e) in a second control position (Fig. 21).

2. Device as claimed in claim 1, **characterised in that** when located in the first control position, the control element (13) simultaneously closes a communicative connection between the rinsing medium inlet (24c) and the pump outlet (29a).

3. Device as claimed in claim 1 or 2, **characterised in that** when located in the second control position, the control element (13) simultaneously closes a communicative connection between the medium inlet (24b) and the pump outlet (29a).

4. Device as claimed in one of the preceding claims, **characterised in that** the device comprises a second medium inlet (16d, 24d) for a second medium which can be connected to a second medium supply and a second medium outlet (16a, 24a) for the second medium which can be connected to a target container for the second medium, and the control element (13) establishes a communicative connection between the second medium inlet (16d, 24d) and the pump outlet (29a) and simultaneously a communicative connection between the pump inlet (29b) and the second medium outlet (16a, 24a) in a third control position (Fig. 23), and which establishes a communicative connection between the rinsing medium inlet (16c, 24c) and the pump outlet (29a) and simultaneously a communicative connection between the pump inlet (29b) and the second medium outlet (16a, 24a) in a fourth control position (Fig. 25).

5. Device as claimed in one of the preceding claims, **characterised in that** the control element (13) has a through-passage (D2) which connects the pump inlet (29b) and the medium outlet (16e, 24e) to one another when the control element (13) is located in the first control position and when the control element is located in the second control position.

6. Device as claimed in claim 5, **characterised in that** the through-passage (D2) has a first opening region (34a) and a second opening region (34b) at its end facing the pump inlet (29b).

7. Device as claimed in claim 6, **characterised in that** the two opening regions (34a, 34b) are provided in the form of a common groove (25c).

8. Device as claimed in one of the preceding claims, **characterised in that** the control element (13) is disposed so as to be rotatable and different control positions of the control element correspond to different positions of rotation of the control element.

9. Device as claimed in one of the preceding claims, **characterised in that** the control element is of a substantially disc-shaped, in particular circular disc-shaped, design.

10. Device as claimed in one of the preceding claims, **characterised in that** the medium inlet (16d, 24d) and the medium outlet (16a, 24a) are disposed on a first side (22) of the control element (13) and the pump outlet (29a) and the pump inlet (29b) are disposed on the other side (23) of the control element.

11. Device as claimed in one of the preceding claims, **characterised in that** the control element has at least a number of grooves (25b, 25c) corresponding to the number of media inlets on its side facing the pump (35).

12. Device as claimed in one of the preceding claims, **characterised in that** the control element (13) is made from ceramic material.

13. Device as claimed in one of the preceding claims, **characterised in that** the pump (35) is provided in the form of a hose pump.

14. Device as claimed in claim 13, **characterised in that** a hose (18) of the hose pump (35) can be flushed with rinsing medium after every intake of medium.

## Revendications

1. Dispositif (10, 12) pour le transport commandé d'au moins un fluide, comprenant une entrée de fluide (24b, 16b) qui peut être reliée à un réservoir de fluide, une sortie de fluide (24e, 16e) qui peut être reliée à un récipient pour le fluide, une entrée de fluide de rinçage (24c, 16c) qui peut être reliée à un réservoir de fluide de rinçage, une sortie de pompe (29a) qui peut être reliée à un côté d'entrée d'une pompe (35), **caractérisé en ce qu'**une entrée de pompe (29b) qui peut être reliée à un côté de sortie de la pompe (35), et comprenant en outre un organe de réglage (13) qui, dans une première position de réglage (figure 19), établit une liaison de communication entre l'entrée de fluide (24b) et la sortie de pompe (29a), ainsi qu'entre l'entrée de pompe (29b) et la sortie de fluide (24e), et qui, dans une deuxième position de réglage (figure 21), établit une liaison de communication entre l'entrée de fluide de rinçage (24c) et la sortie de pompe (29a) ainsi qu'entre l'entrée de pompe (29b) et la sortie de fluide (24e).

2. Dispositif selon la revendication 1, **caractérisé en ce que**, lorsqu'il se trouve dans la première position de réglage, l'organe de réglage (13) bloque en même temps la liaison de communication entre l'entrée de fluide de rinçage (24c) et la sortie de pompe (29a).

3. Dispositif selon la revendication 1 ou 2, **caractérisé en ce que**, lorsqu'il se trouve dans la deuxième position de réglage, l'organe de réglage (13) bloque en même temps la liaison de communication entre l'entrée de fluide (24b) et la sortie de pompe (29a).

4. Dispositif selon une des revendications précédentes, **caractérisé en ce qu'**il comprend une deuxième entrée de fluide (16d, 24d) pour un deuxième fluide qui peut être reliée à un deuxième réservoir de fluide, et une deuxième sortie de fluide (16a, 24a) pour le deuxième fluide qui peut être reliée avec un récipient, l'organe de réglage (13) établissant, dans une troisième position de réglage (figure 23), une liaison de communication entre la deuxième entrée de fluide (16d, 24d) et la sortie de pompe (29a) ainsi qu'entre l'entrée de pompe (29b) et la deuxième sortie de fluide (16a, 24a), et établissant, dans une quatrième position de réglage (figure 25), une liaison de communication entre l'entrée de fluide de rinçage (16c, 24c) et la sortie de pompe (29a) ainsi qu'entre l'entrée de pompe (29b) et la deuxième sortie de fluide (16a, 24a).

5. Dispositif selon une des revendications précédentes, **caractérisé en ce que** l'organe de réglage (13) présente un canal de passage (D2) qui relie l'entrée de pompe (29b) avec la sortie de fluide (16e, 24e) dans la première position de réglage et dans la deuxième position de réglage.

6. Dispositif selon la revendication 5, **caractérisé en ce que** le canal de passage (D2) présente à son extrémité située du côté de l'entrée de pompe (29b) une première section d'embouchure (34a) et une deuxième section d'embouchure (34b).

7. Dispositif selon la revendication 6, **caractérisé en ce que** les deux sections d'embouchure (34a, 34b) sont offertes par une rainure commune (25c).

8. Dispositif selon une des revendications précédentes, **caractérisé en ce que** l'organe de réglage (13) peut pivoter et que différentes positions de réglage de l'organe de réglage correspondent à différentes positions en rotation de l'organe de réglage.

9. Dispositif selon une des revendications précédentes, **caractérisé en ce que** l'organe de réglage a sensiblement une forme de disque, en particulier une forme de disque circulaire.

10. Dispositif selon une des revendications précédentes, **caractérisé en ce que** l'entrée de fluide (16d, 24d) et la sortie de fluide (16a, 24a) sont disposées sur une face (22) de l'organe de réglage (13) et la sortie de pompe (29a) et l'entrée de pompe (29b) sur l'autre face (23) de l'organe de réglage.

11. Dispositif selon une des revendications précédentes, **caractérisé en ce que** l'organe de réglage présente sur sa face orientée du côté de la pompe (35) un nombre de rainures (25b, 25c) au moins correspondant au nombre d'entrées de fluide.

12. Dispositif selon une des revendications précédentes, **caractérisé en ce que** l'organe de réglage (13) est en céramique.

13. Dispositif selon une des revendications précédentes, **caractérisé en ce que** la pompe (35) est une pompe péristaltique.

14. Dispositif selon la revendication 13, **caractérisé en ce qu'**un tuyau (18) de la pompe péristaltique (35) peut être rincé avec le fluide de rinçage après chaque admission de fluide.
